# EUROPÄISCHE PATENTSCHRIFT

(11) **EP 2 108 554 B1**
(45) Veröffentlichungstag und Bekanntmachung des Hinweises auf die Patenterteilung: **19.06.2013**
(21) Anmeldenummer: 09004884.4
(22) Anmeldetag: 02.04.2009
(51) Int. Cl.: B60T 8/17, B60T 8/32, B60T 8/88, B60T 13/68, B60T 17/08

(54) **Verfahren zum Betreiben einer Bremsanlage und Bremsanlage für ein Nutzfahrzeug**
Braking assembly for a commercial vehicle and method for operating a braking assembly
Procédé de fonctionnement d'une installation de frein et installation de frein pour un véhicule utilitaire

(30) Priorität: 11.04.2008 DE 102008018622
(43) Veröffentlichungstag der Anmeldung: 14.10.2009
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- EP-A- 0 425 810
- EP-A- 0 741 066
- EP-A- 1 172 272
- EP-A- 1 504 975
- DE-A1- 19 942 533
- DE-A1-102004 015 710
- DE-A1-102005 043 608
- DE-A1-102006 041 008

## Beschreibung

Die Erfindung betrifft ein Verfahren zum Betreiben einer eine Feststellbremse mit Feststellbremsaktuatoren und eine Betriebsbremse umfassenden Bremsanlage eines Nutzfahrzeugs, wobei im Falle eines Defektes der Betriebsbremse die Feststellbremse eine Bremsung des Nutzfahrzeugs unterstützt.

Die Erfindung betrifft weiterhin eine Bremsanlage eines Nutzfahrzeugs mit einer Feststellbremsaktuatoren umfassenden Feststellbremse und einer Betriebsbremse, wobei im Falle eines Defektes der Betriebsbremse die Feststellbremse eine Bremsung des Nutzfahrzeugs unterstützt.

Nutzfahrzeuge verfügen über eine Bremsanlage, die eine Betriebsbremse und eine Feststellbremse umfasst. Die Betriebsbremse des Nutzfahrzeugs muss dabei so ausgelegt sein, dass das Nutzfahrzeug sicher angehalten werden kann. Dies gilt insbesondere im Defektfall der Betriebsbremse, wobei das Erreichen einer bestimmten, fahrzeugabhängigen Mindestbremswirkung auch im Defektfall vorgeschrieben ist.

Zu diesem Zweck können beispielsweise separate Betriebsbremskreise der Betriebsbremse entsprechend ausgelegt werden, was jedoch einen erhöhten baulichen Aufwand verursacht. Aus der DE 10 2006 04108 A1 sind ein derartiges Verfahren und eine derartige Anlage bekannt.

Aus der DE 10 2005 043 608 A1 ist weiterhin bekannt, die defekte Betriebsbremse durch das Schließen der Feststellbremse in ihrer Bremswirkung zu unterstützen.

Insbesondere werden dabei die Federspeicherzylinder der Feststellbremse gemäß einer vorgegebenen Zeit-Druck-Trennlinie entlüftet.

Die Aufgabe der vorliegenden Erfindung besteht darin, das Verfahren hinsichtlich der Bremswirkung unter Sicherheitsaspekten zu verbessern.

Diese Aufgabe wird durch die Merkmale der unabhängigen Ansprüche gelöst.

Vorteilhafte Ausführungsformen der Erfindung sind in den abhängigen Ansprüchen angegeben.

Die Erfindung baut auf dem Stand der Technik dadurch auf, dass mehrere Fahrzeugachsen in beliebigen Kombinationen durch die Feststellbremse gebremst werden können und dass nur die Fahrzeugachsen von der Feststellbremse gebremst werden, die von dem Defekt der Betriebsbremse betroffen sind.
Sind nur einzelne Fahrzeugachsen beziehungsweise Fahrzeugräder von dem Defekt der Betriebsbremse betroffen, so kann die reduzierte Bremswirkung der Betriebsbremse zumindest teilweise kompensiert werden, ohne sonstige Nachteile in Kauf nehmen zu müssen.
Insbesondere kann die ABS-Funktionalität der weiterhin durch die Betriebsbremse gebremsten Fahrzeugachsen oder Fahrzeugräder uneingeschränkt Aufrecht erhalten werden, was vorteilhaft hinsichtlich der Regelgeschwindigkeit der verwendeten ABS-Regelschleife sein kann, da die dynamische Anpassung der Bremskraft der Feststellbremse etwas träger arbeitet als bei der Betriebsbremse.

Die dynamische Anpassung der von der Feststellbremse ausgeübten Bremswirkung über eine ABS-Regelschleife ergibt eine von den Straßenverhältnissen unabhängige Verbesserung der Bremswirkung auch bei einem Defekt der Betriebsbremsanlage, die zum Beispiel eine pneumatisch betriebene Bremsanlage mit einer ABS-Funktionalität sein kann. Insbesondere dann kann eine ABS-Artige Bremsunterstützung für Nutzfahrzeuge auch bei einem Defekt der Betriebsbremse Aufrecht erhalten werden, so dass auch bei einem unbeladenen Nutzfahrzeug die Fahrzeugräder nicht blockieren.

Vorzugsweise ist dabei vorgesehen, dass die Feststellbremsaktuatoren Federspeicherbremszylinder umfassen, wobei die aufzubringenden Bremskräfte als Entlüftungsraten für die Federspeicherbremszylinder bestimmt werden und dass die Feststellbremsaktuatoren gemäß den bestimmten Entlüftungsraten entlüftet werden. Federspeicherbremszylinder eignen sich besonders gut für die dynamische Anpassung der ausgeübten Bremskräfte über eine ABS-Regelschleife.

Alternativ kann vorgesehen sein, dass die Feststellbremsaktuatoren elektromotorisch zuspannbare Feststellbremsaktuatoren umfassen, wobei die aufzubringenden Bremskräfte als Steuerimpulse für die elektromotorisch zuspannbaren Feststellbremsaktuatoren bestimmt werden und dass die elektromotorisch zuspannbaren Feststellbremsaktuatoren gemäß den bestimmten Steuerimpulsen betätigt werden. Auch wenn die Feststellbremse über elektrische Stellmotoren zuspannbare Bremszylinder aufweist ist eine dynamische Anpassung der aufzubringenden Bremskräfte möglich.

Dabei kann vorgesehen sein, dass die ABS-Regelschleife eine Individualregelung für ein von der Feststellbremse gebremstes Fahrzeugrad umfasst, wobei die aufzubringende Bremskraft für das gebremste Fahrzeugrad separat bestimmt wird. Durch die Anpassung der aufzubringenden Bremskraft an das jeweilige Fahrzeugrad, zum Beispiel über die Anpassung der Entlüftungsrate eines Federspeicherbremszylinders, ist eine optimale Bremswirkung der Feststellbremse auch auf für unterschiedliche Fahrzeugräder auf unterschiedlichen Fahrbahnverhältnissen möglich.

Alternativ kann vorgesehen sein, dass die ABS-Regelschleife eine "Select Low" Regelung für eine von der Feststellbremse gebremste Fahrzeugachse umfasst, wobei die aufzubringende Bremskraft der Feststellbremsaktuatoren der gebremsten Fahrzeugachse durch die höchste aufzubringende Bremskraft bestimmt wird, bei der noch kein Fahrzeugrad an der gebremsten Fahrzeugachse blockiert. Durch die achsweise Anpassung der aufzubringenden Bremskraft, zum Beispiel über die Anpassung der Entlüftungsrate von Federspeicherbremszylindern, wird zwar das übertragbare Bremsmoment reduziert, jedoch wird im Gegenzug die am Nutzfahrzeug auftretende Querbeschleunigung durch unterschiedlich stark bremsende Fahrzeugräder an einer Achse minimiert.

Bevorzugt ist jedoch vorgesehen, dass die ABS-Regelschleife eine modifizierte Individualregelung für eine von der Feststellbremse gebremste Fahrzeugachse umfasst, wobei die aufzubringende Bremskraft der Feststellbremsaktuatoren der gebremsten Fahrzeugachse durch die höchste aufzubringende Bremskraft bestimmt wird, bei der noch kein Fahrzeugrad an der gebremsten Fahrzeugachse blockiert, und diese aufzubringende Bremskraft durch die übrigen Feststellbremsaktuatoren an derselben gebremsten Fahrzeugachse um eine vorgegebene Toleranz überschritten werden darf. Durch diese modifizierte Individualregelung wird eine maximale Bremswirkung der Feststellbremse bis zu einem Blockieren der Fahrzeugräder analog der Individualregelung beziehungsweise bis zu einer maximalen Querbeschleunigung ermöglicht. Die modifizierte Individualregelung stellt daher eine Art Mischform zwischen der Individualregelung und der "Select Low" Regelung dar.

Vorteilhafterweise ist vorgesehen, dass die ABS-Regelschleife Drehzahl- beziehungsweise Drehfrequenzverläufe der abzubremsenden Fahrzeugräder berücksichtigt. Die Drehzahl- beziehungsweise Drehfrequenzverläufe der abzubremsenden Fahrzeugräder sind typische Eingangsgrößen einer ABS-Regelschleife.

Die erfindungsgemäße Bremsanlage baut auf dem Stand der Technik dadurch auf, dass die Feststellbremse dazu ausgelegt ist, mehrere Fahrzeugachsen in beliebigen Kombination zu bremsen und nur die Fahrzeugachsen zu bremsen, die von dem Defekt der Betriebsbremse betroffen sind.

Auf dieser Grundlage werden die Vorteile und Besonderheiten des erfindungsgemäßen Verfahrens auch im Rahmen einer Vorrichtung umgesetzt.

Diese kann vorteilhafterweise dadurch weiterentwickelt werden, dass die Feststellbremse dazu ausgelegt ist, über die Feststellbremsaktuatoren gleichzeitig unterschiedliche Bremskräfte auszuüben. Falls ein Fahrzeugrad zum Blockieren neigt, kann die durch den Feststellbremsaktuator ausgeübte Bremskraft auch nachträglich etwas reduziert werden, damit das Rad frei wird.

Die Erfindung wird nun mit Bezug auf die begleitenden Zeichnungen anhand besonders bevorzugter Ausführungsformen beispielhaft erläutert.

### Es zeigen:

- Figur 1: eine Bremsanlage eines Nutzfahrzeugs in schematisch vereinfachter Darstellung;
- Figur 2: einen Teil einer Bremsanlage eines Nutzfahrzeugs in schematisch vereinfachter Darstellung;
- Figur 3: einen Teil einer Bremsanlage eines Nutzfahrzeugs in schematisch vereinfachter Darstellung;
- Figur 4: eine schematische Darstellung eines Nutzfahrzeugs mit einer erfindungsgemäßen Bremsanlage;
- Figur 5: ein Flussdiagramm zur Erläuterung des erfindungsgemäßen Verfahrens und
- Figur 6: einen zeitlichen Ablauf einer ABS-Regelschleife.

In den folgenden Zeichnungen bezeichnen gleiche Bezugszeichen gleiche oder gleichartige Teile.

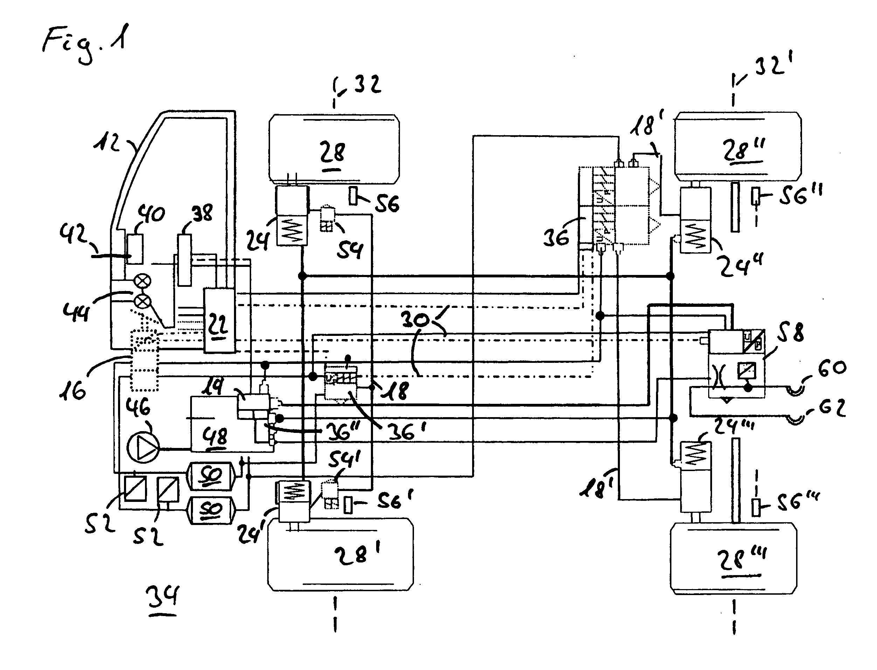

Figur 1 zeigt eine Bremsanlage eines Nutzfahrzeugs in schematisch vereinfachter Darstellung. Ein Nutzfahrzeug 12, welches als einfache Fahrerkabine angedeutet ist, umfasst eine Bremsanlage 34, deren Komponenten in schematischer Weise dargestellt sind. Das Nutzfahrzeug 12 weist Fahrzeugachsen 32, 32' mit Fahrzeugrädern 28, 28', 28", 28'" auf, denen jeweils ein Feststellbremsaktuator 24, 24', 24", 24"', der jeweils als Federspeicherbremszylinder dargestellt ist, und ein Raddrehzahlsensor 56, 56', 56", 56'" zugeordnet sind. Anstelle der dargestellten pneumatisch betätigbaren Federspeicherbremszylinder 24, 24', 24", 24"' kann die Bremsanlage 34 auch elektromotorische Feststellbremsaktuatoren zum Erzeugen der Feststellbremskraft haben, wobei die Bremsbeläge bei verändertem Stromfluss durch den Aktuator, der zum Beispiel ein Elektromotor sein kann, an die Radtrommel oder die Scheibenbremse des Fahrzeugrades 28, 28', 28", 28"' angepresst beziehungsweise von diesen abgehoben werden. Zum Beispiel kann bei einer Reduzierung der Bestromung des Aktuators der Bremsbelag an die Scheibe angepresst werden, indem ein Energie speicherndes Element, zum Beispiel eine Feder, diese Anpressung realisiert.

Weiterhin sind an der Vorderachse 32 des Nutzfahrzeugs 12 ABS-Modulatoren 54, 54' in einem ersten Betriebsbremskreis 18 eingezeichnet. Separat hiervon existiert ein zweiter Betriebsbremskreis 18', der die Hinterachse 32' des Nutzfahrzeugs 12 bremst, wobei der Einfachheit halber in dem zweiten Betriebsbremskreis 18' keine ABS-Modulatoren eingezeichnet sind. Der erste Betriebsbremskreis 18 und der zweite Betriebsbremskreis 18' werden über Ventilmodule 36, 36' betätigt, die wiederum über einen CAN-Bus 30 von einem weiteren elektrischen Steuergerät 22 elektrisch ansteuerbar sind. Das weitere elektrische Steuergerät 22 ist wiederum mit einem Betriebsbremswertgeber 16 elektrisch gekoppelt, wobei aus Sicherheitsgründen noch pneumatische Backup-Leitungen vorgesehen sind, über die die Ventilmodule 36, 36' direkt von dem Betriebsbremswertgeber 16 ansteuerbar sind. Die Versorgung der Betriebsbremskreise 18, 18' erfolgt über einen Kompressor 46 und eine Druckluftaufbereitungsanlage 48, wobei die aufbereitete Druckluft in Vorratsbehältern 50 gespeichert wird. Weiterhin ist ein Anhängersteuermodul 58 vorgesehen, das einen Druckversorgungsanschluss 60 für einen Anhänger und einen Anhängersteuerungsanschluss 62 bereitstellt. Die in den Betriebsbremskreisen 18, 18' verwendeten Federspeicherbremszylinder 24, 24', 24", 24'" weisen, neben dem Anschluss an die Betriebsbremse, einen zweiten Anschluss auf, über den die Feststellbremsfunktionalität dieser Kombinationszylinder nutzbar ist. Über Druckleitungen sind diese Anschlüsse auch mit einen von einem elektrischen Steuergerät 14 ansteuerbaren Ventilmodul 36" gekoppelt. Das elektrische Steuergerät 14, beziehungsweise des Ventilmodul 36", ist bistabil und selbsthaltend ausgelegt und geeignet, den Feststellbremsdruck in den Federspeicherbremszylindern 24, 24', 24", 24'" zu bestimmen sowie eine Anhängertestfunktion zu steuern. Weiterhin kann das elektrische Steuergerät 14 zusammen mit dem Ventilmodul 36" in die Druckluftaufbereitungsanlage 48 oder ein nicht dargestelltes ABS-Steuermodul integriert oder teilintegriert werden. Die in Figur 1 dargestellte Verrohrung ist nur symbolisch zu verstehen. Die genaue Rohrführung hängt davon ab, ob die Federspeicherbremszylinder 24, 24', 24", 24"' einzeln oder achsweise ansteuerbar sein sollen. Das elektrische Steuergerät 14 ist über eine elektrische Leitung mit einer Handsteuereinheit 38, die einen Akku aufweisen kann, gekoppelt. Über die Handsteuereinheit 38 ist die Feststellbremse des Nutzfahrzeugs 12 betätigbar. Weiterhin kann sie auch eine Wake-Up Funktion umfassen, um das Betätigen der Feststellbremse bei deaktivierter Zündung zu ermöglichen. Die Handsteuereinheit 38 kann auch eine Testfunktion unterstützen, die das separate Öffnen der Feststellbremse eines Anhängers ermöglicht. Fehlermeldungen der Bremsanlage 34 können über eine Signallampe 44 ausgegeben werden. Die Signallampe 44 ist dabei symbolhaft als Ausgabemittel zu verstehen. Ein Tachograph 40 ist über die Information der Raddrehzahlsensoren 56, 56', 56", 56'" betreibbar, die er über den CAN-Bus 30 empfängt, und weist einen Anschluss an einen Fahrzeug CAN 42 auf. Das Nutzfahrzeug 12 umfasst auch eine nicht dargestellte Möglichkeit zum Empfang externer Informationen, die den CAN-Bus 30 eingespeist werden können. Die Überwachung der Drücke in den verschiedenen voneinander getrennten Druckkreisläufen erfolgt über Drucksensoren 52.

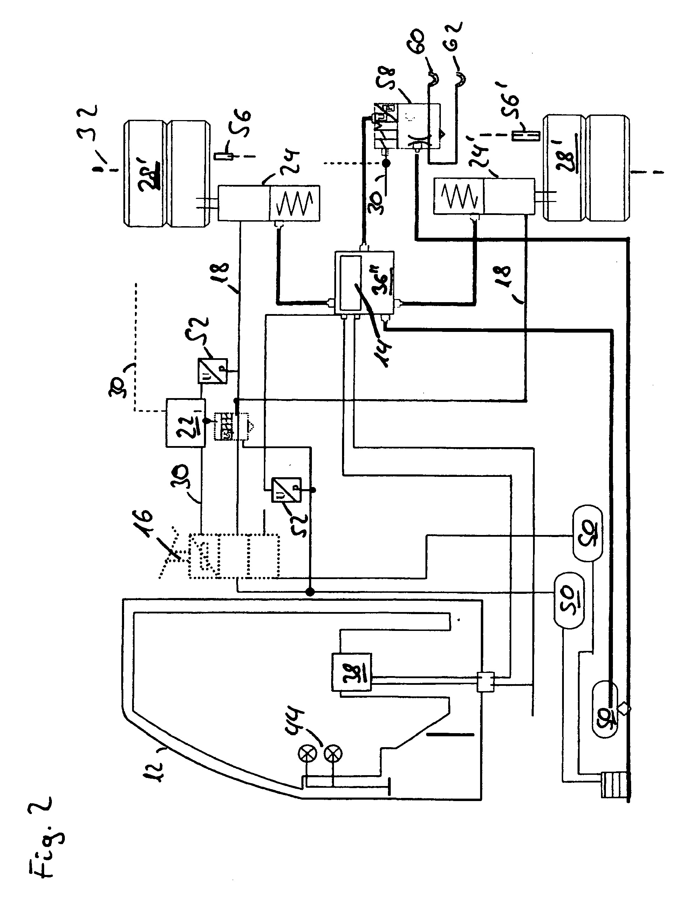

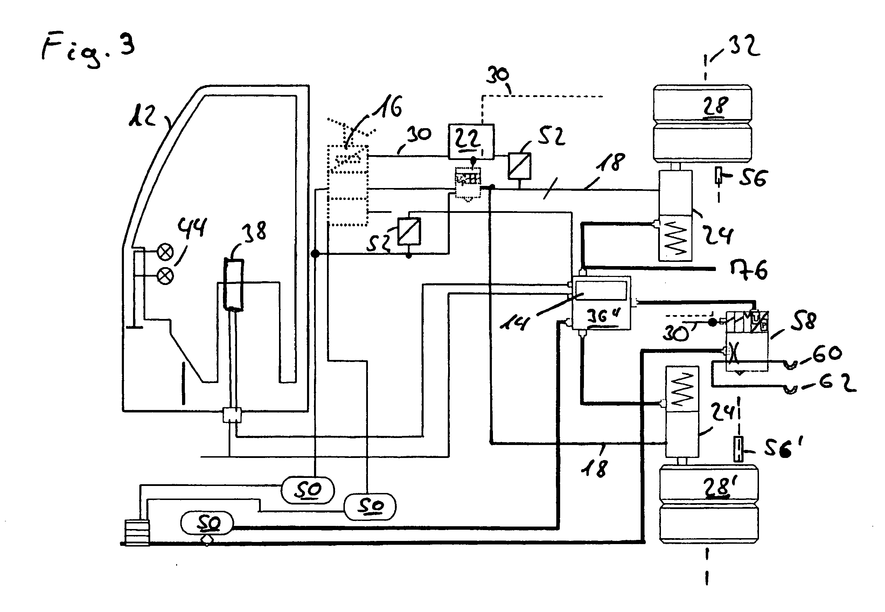

Figuren 2 und 3 zeigen einen Teil einer Bremsanlage eines Nutzfahrzeugs in schematisch vereinfachter Darstellung. Insbesondere ist in den Figuren 2 und 3 nur die Vorderachse 32 des Nutzfahrzeugs 12 mit den darin angeordneten Komponenten gezeigt. Insbesondere zeigt Figur 2 eine Ausführungsform mit durch das Ventilmodul 36" separat ansteuerbaren Federspeicherbremszylindern 24 und 24', da separate Verrohrungen in der Figur 2 explizit dargestellt sind. In Figur 3 ist eine Möglichkeit zum Anschluss weiterer nicht dargestellter Federspeicherbremszylinder über einen Druckanschluss 76 an das Ventilmodul 36" angedeutet.

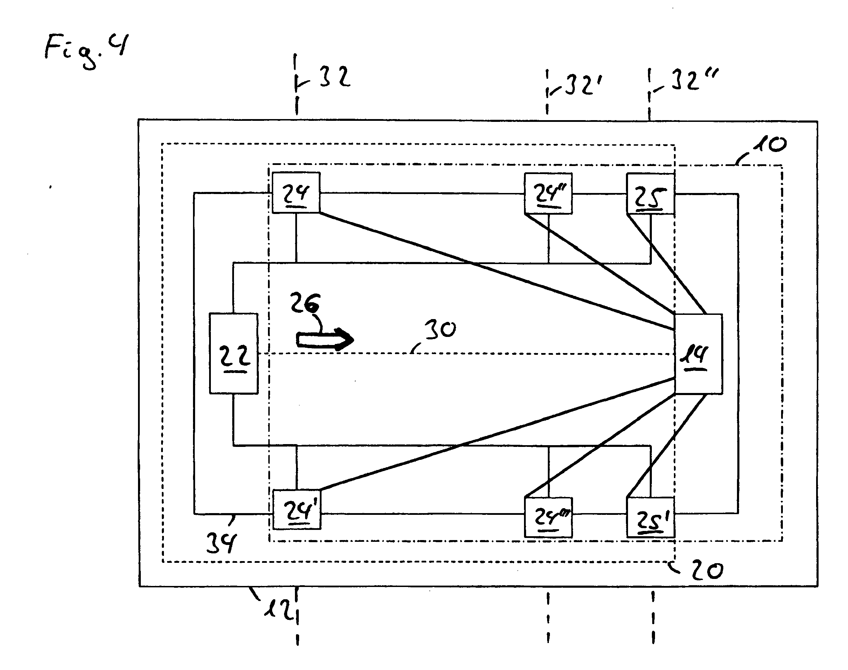

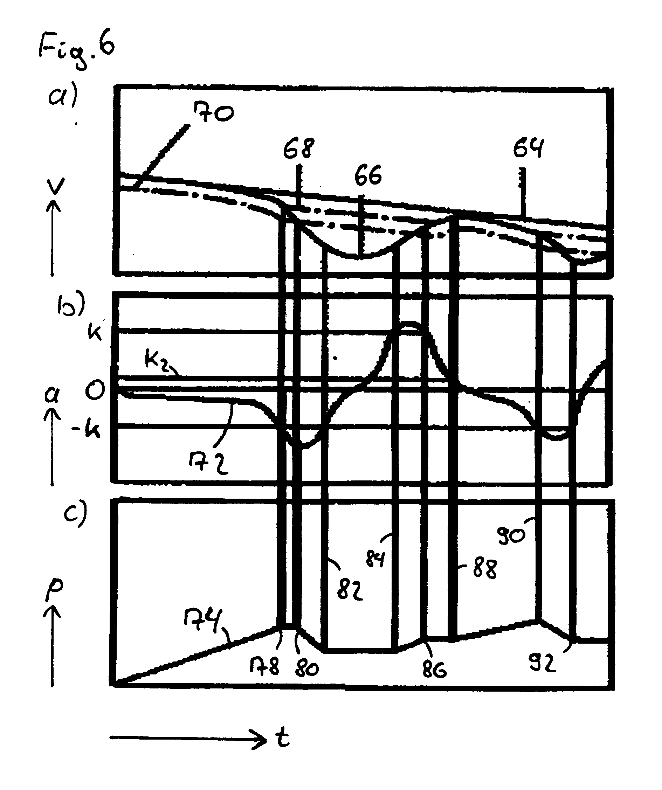

Figur 4 zeigt eine schematische Darstellung eines Nutzfahrzeugs mit einer erfindungsgemäßen Bremsanlage. Das dargestellte Nutzfahrzeug 12 verfügt über drei Fahrzeugachsen 32, 32', 32" an denen jeweils Federspeicherbremszylinder 24, 24', 24", 24"', 25, 25' paarweise angeordnet sind. Die Federspeicherbremszylinder 24, 24', 24", 24"', 25, 25' gehören zu einer Bremsanlage 34, die eine Betriebsbremse 20 und eine Feststellbremse 10 umfasst. Die Federspeicherbremszylinder 24, 24', 24", 24"', 25, 25' gehören als Kombinationszylinder dabei sowohl zu der Betriebsbremse 20 als auch zu der Feststellbremse 10, wobei die jeweiligen Steuergeräte 14, 22 der Feststellbremse 10 beziehungsweise der Betriebsbremse 20 über den CAN-Bus 30 miteinander gekoppelt sind. Tritt in einem Betriebsbremskreis der Betriebsbremse 20 ein Defekt auf, beispielsweise an der Vorderachse 32 des Nutzfahrzeugs 12, so sind die dort angeordneten Federspeicherbremszylinder 24, 24' nicht mehr durch die Betriebsbremse 20 betätigbar. Ein Defekt kann zum Beispiel der Pedalbruch des Betriebsbremsventils sein, wodurch ein Betätigen des elektrischen und pneumatischen Steuerkreises der Betriebsbremse nicht mehr möglich ist. Ein gestuftes Abbremsen des Fahrzeugs kann dann unter Einbeziehung der Feststellbremse erfolgen. Ist die Feststellbremsverzögerung zusätzlich regelbar über Raddrehzahlsensoren 56, 56', 56", 56"', so kann das Fahrzeug sicher verzögert bzw. zum Stillstand gebracht werden, ohne dass die Räder blockieren. Das weitere elektrische Steuergerät 22 teilt dem elektrischen Steuergerät 14 der Feststellbremse 10 den Fehler über den CAN-Bus 30 in Form eines Steuersignals 26 mit, was in Form eines Pfeils angedeutet ist. Wird eine Bremsung des Nutzfahrzeugs 12 über die Betriebsbremse 20 angefordert, so kann das weitere Steuergerät 22 aufgrund des Defekts lediglich die an den Achsen 32', 32" angeordneten Federspeicherbremszylinder 24", 24", 25, 25' ansteuern. Das weitere Steuergerät 22 gibt nun über den CAN-Bus 30 ein Steuersignal 26 an das Steuergerät 14 aus, wodurch die Feststellbremse 10 veranlasst wird, die an der Achse 32 angeordneten Federspeicherbremszylinder 24, 24' zu entlüften, das heißt die Feststellbremse an der Fahrzeugachse 32 zu betätigen. Dabei wird eine in das Steuergerät 14 integrierte ABS-Regelschleife berücksichtig, die im Zusammenhang mit der Figur 6 noch genauer erläutert wird. Es wird weiterhin ein Signal an die ABS-Regelung der Betriebsbremse gesendet, um den Bremsdruck der Betriebsbremse und die Auswertung der Drehratensensoren an die langsamer reagierende ABS-Regelschleife der Feststellbremse anzupassen. Beide Systeme das elektrisch betätigbare ABS-Fähige Betriebsbremssystem und die elektrisch betätigbare Feststellbremse tauschen also interne Daten über eine elektrische serielle Kommunikationsleitung aus. Dieser Austausch kann von weiteren hier nicht dargestellten Steuergeräten, zum Beispiel einem Fahrzeugführungsrechner, überwacht werden. Ein Time out des Kommunikationssignals über einen längeren Zeitraum und detektierbar von einem der elektrischen Mikrokontrollereinheiten der Feststellbremse oder der Betriebsbremse, wird dabei, insbesondere nach dem erfolglosem Versuch des Wiederaufnehmens der elektrischen Kommunikation, als Defekt eines der ABS-fähigen Betriebsbremse ausgewertet.

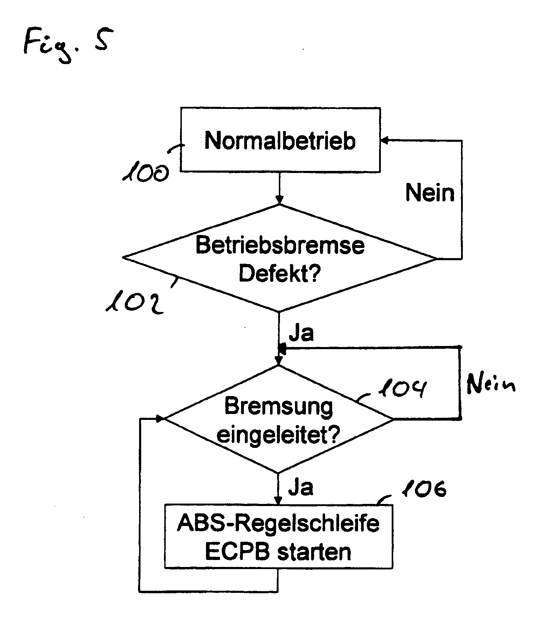

Figur 5 zeigt ein Flussdiagramm zur Erläuterung des erfindungsgemäßen Verfahrens. Ausgehend von Schritt 100, dem Normalbetrieb des Nutzfahrzeugs, wird in Schritt 102 überprüft, ob die Betriebsbremse einen Defekt aufweist. Falls Nein, wird bei Schritt 100 fortgefahren. Falls Ja, wird bei Schritt 104 fortgefahren und überprüft, ob eine Bremsung über die Betriebsbremse eingeleitet wurde. Falls Nein, wird bei Schritt 104 fortgefahren. Falls Ja, wird bei Schritt 106 fortgefahren und die ABS-Regelschleife für die elektrisch gesteuerte Feststellbremse gestartet. Die ABS-Regelschleife der Feststellbremse ist aufgrund des großen Federspeichervolumenanteils eher träge, weshalb eine Einbeziehung des Vor- und des Nachlaufs in Form von Referenzgeschwindigkeiten, welche über den theoretischen Schlupfgeschwindigkeiten liegen, berücksichtigt werden. Das explizite Vorgehen ist dabei in Zusammenhang mit Figur 4 bereits beschrieben, während die genaue Ausgestaltung der ABS-Regelschleife in Zusammenhang mit Figur 6 im Folgenden detailliert beschrieben wird.

Figur 6 zeigt einen zeitlichen Ablauf einer ABS-Regelschleife. Aufgetragen ist auf der x-Achse die Zeit, auf der y-Achse von Figur 6a) die Geschwindigkeit v, auf der y-Achse von Figur 6b) die Beschleunigung a eines gebremsten Fahrzeugrades und auf der y-Achse von Figur 6c) der Anpressdruck p des dem gebremsten Fahrzeugrad zugeordneten Federspeicherbremszylinders, das heißt, die von dem Federspeicherbremszylinder aufgebrachte Kraft pro Fläche. Der Anpressdruck p ist also nicht identisch mit dem in dem Federspeicherbremszylinder herrschenden Federspeicherkammerdruck, der die Feder spannt. Soll anstelle des Anpressdrucks p in Bild 6c) der real herrschende Federspeicherkammerdruck aufgetragen werden, so ist der Graph an der x-Achse zu spiegeln und um etwa 8,5 bar nach oben zu verschieben, da bei etwa 8,5 bar das Rad frei ist. Zu beachten wäre weiterhin, dass eine Verzögerung des Rades typischerweise bei 4 bar einsetzt. Der Anpressdruck p, beziehungsweise die zugehörige Kraft kann über die Messung des Federspeicherkammerdrucks bestimmt werden. Wird eine Bremsung des Fahrzeugs veranlasst und liegt gleichzeitig ein Defekt der Betriebsbremse vor, so werden die den abzubremsenden Fahrzeugrädern zugeordneten Federspeicherbremszylinder entlüftet, wobei der Anpressdruck p gemäß einer Kurve 74 ansteigt. Dies ist gleichbedeutend mit einem langsamen Schließen des Federspeicherbremszylinders durch ein Absenken des Federspeicherkammerdrucks und damit spiegelbildlich zu der üblichen Bremsbetätigung der Betriebsbremse, die Druck im Bremszylinder aufbaut, also erhöht, um eine Bremswirkung zu erzielen und das Rad zu verzögern. Zu einem Zeitpunkt t₁ 78 ist eine Fahrzeuggeschwindigkeit 64, die aufgrund der einsetzenden Bremswirkung abfällt, von dem durch die Feststellbremse gebremsten Fahrzeugrad um eine Referenzgeschwindigkeit 68 verschieden. Die Referenzgeschwindigkeit 68 ist dabei jeweils um einen festen Betrag niedriger als die Fahrzeuggeschwindigkeit 64. Dies ist in Figur 6a) zu dem Zeitpunkt t₁ 78 an der Schnittstelle zwischen der Reverenzgeschwindigkeit 68 und einer Radgeschwindigkeit 66 sichtbar. Ab diesem Zeitpunkt wird der Druck in dem Federspeicherbremszylinder konstant gehalten und infolgedessen bleibt auch der Anpressdruck 74 bis zu einem Zeitpunkt t₂ 80 konstant, bei dem aufgrund einer Radumfangsbeschleunigung 72, dargestellt in Figur 6b), ein beginnendes Blockieren des Fahrzeugrades, durch eine Schlupfgeschwindigkeit 70 markiert, ermittelbar ist. Um ein vollständiges Blockieren des von der Feststellbremse gebremsten Fahrzeugrades zu verhindern, wird ab dem Zeitpunkt t₂ 80 bis zu einem Zeitpunkt t₃ 82 der Druck in den Federspeicherbremszylindern wieder erhöht, um den Anpressdruck 74 wieder zu senken. Infolgedessen wächst die bislang negative Radumfangsbeschleunigung 72 ab dem Zeitpunkt t₂ 80 wieder an und überschreitet bei dem Zeitpunkt t₃ 82 wieder den vorgebbaren Wert -k. In dem Zeitintervall t₃ 82 bis t₄ 84 steigt die Radumfangsbeschleunigung 72 von einem Wert -k über eine verschwindende Radumfangsbeschleunigung 72 bis zu einem Wert +k an. Bei dem Nulldurchgang der Radumfangsbeschleunigung 72 hat die zugehörige Radgeschwindigkeit ihre maximale Differenz zu der Fahrzeuggeschwindigkeit 64 erreicht und nähert sich dieser wieder langsam an. Erreicht die Radumfangsbeschleunigung 72 den Wert +k, wird der Anpressdruck durch Entlüften des Federspeicherbremszylinders bis zu einem Zeitpunkt t₅ 86 erhöht, bei dem die Radumfangsbeschleunigung erneut durch den Wert +k geht. Da die Radumfangsbeschleunigung zu dem Zeitpunkt t₄ 86 mit +k weiterhin größer Null ist, nähert sich die Radgeschwindigkeit 66 weiter der Fahrzeuggeschwindigkeit 64 an. Der Anpressdruck 74 des Federspeicherbremszylinders wird bis zu einem Zeitpunkt t₆ 88, bei dem die Radumfangsbeschleunigung den positiven Wert k₂ < +k erreicht, konstant gehalten. Bei Erreichen der positiven kleinen Radumfangsbeschleunigung k₂ zum Zeitpunkt t₆ hat sich die Radgeschwindigkeit 66 wieder nahezu der Fahrzeuggeschwindigkeit 64 angenähert. Um nicht unnötig Bremswirkung zu vergeuden, wird daher ab dem Zeitpunkt t₆ 88 bis zu einem Zeitpunk t₇ 90 der Anpressdruck 74 des Federspeicherbremszylinders durch Entlüften wieder erhöht und der ABS-Regelkreis beginnt erneut zum Zeitpunkt t₇ 90 analog zum Zeitpunkt t₁ 78, wobei das Plateauintervall zwischen dem Zeitpunkt t₁ 78 und dem Zeitpunkt t₂ 80 entfallen kann, weshalb ein Zeitpunkt t₈ 92 regeltechnisch äquivalent zum Zeitpunkt t₃ 82 dargestellt ist.

### Bezugszeichenliste

- 10: Feststellbremse
- 12: Nutzfahrzeug
- 14: elektrisches Steuergerät
- 16: Betriebsbremswertgeber
- 18: Betriebsbremskreis
- 18': Betriebsbremskreis
- 20: Betriebsbremse
- 22: weiteres elektrisches Steuergerät
- 24: Feststellbremsaktuator
- 24': Feststellbremsaktuator
- 24": Feststellbremsaktuator
- 24"': Feststellbremsaktuator
- 25: Feststellbremsaktuator
- 25': Feststellbremsaktuator
- 26: Steuersignal
- 28: Fahrzeugrad
- 28': Fahrzeugrad
- 28": Fahrzeugrad
- 28"': Fahrzeugrad
- 30: CAN-Bus
- 32: Fahrzeugachse
- 32': Fahrzeugachse
- 32": Fahrzeugachse
- 34: Bremsanlage
- 36: Ventilmodul
- 36': Ventilmodul
- 36": Ventilmodul

- 38: Handsteuereinheit
- 40: Tachograph
- 42: Fahrzeug CAN
- 44: Signallampe
- 46: Kompressor
- 48: Druckluftaufbereitungsanlage
- 50: Behälter
- 52: Drucksensor
- 54: ABS-Modulator
- 54': ABS-Modulator
- 56: Drehzahlsensor
- 56': Drehzahlsensor
- 56": Drehzahlsensor
- 56"': Drehzahlsensor
- 58: Anhängersteuermodul
- 60: Druckversorgungsanschluss Anhänger
- 62: Anhängersteuerungsanschluss
- 64: Fahrzeuggeschwindigkeit
- 66: Radgeschwindigkeit
- 68: Referenzgeschwindigkeit
- 70: Schlupfgeschwindigkeit
- 72: Radumfangsbeschleunigung
- 74: Anpressdruck
- 76: Druckanschluss
- 78: Zeitpunkt t₁
- 80: Zeitpunkt t₂
- 82: Zeitpunkt t₃
- 84: Zeitpunkt t₄
- 86: Zeitpunkt t₅
- 88: Zeitpunkt t₆
- 90: Zeitpunkt t₇
- 92: Zeitpunkt t₈
- 100: Normalbetrieb
- 102: Betriebsbremse defekt?
- 104: Bremsung eingeleitet?
- 106: ABS-Regelschleife ECPB starten

## Patentansprüche

1. Verfahren zum Betreiben einer eine Feststellbremse (10) mit Feststellbremsaktuatoren (24, 24', 24", 24"', 25, 25') und eine Betriebsbremse (20) umfassenden Bremsanlage (34) eines Nutzfahrzeugs (12), wobei im Falle eines Defektes der Betriebsbremse (20) die Feststellbremse (10) eine Bremsung des Nutzfahrzeugs (12) unterstützt, wobei die von den Feststellbremsaktuatoren (24, 24', 24", 24"', 25, 25') der Feststellbremse (10) aufzubringenden Bremskräfte über eine ABS-Regelschleife bestimmt werden und die Feststellbremsaktuatoren (24, 24', 24", 24"', 25, 25') gemäß den bestimmten aufzubringenden Bremskräften betätigt werden, **dadurch gekennzeichnet,**
- **dass** mehrere Fahrzeugachsen (32, 32', 32") in beliebigen Kombinationen durch die Feststellbremse (10) gebremst werden können und
- **dass** nur die Fahrzeugachsen (32, 32', 32") von der Feststellbremse (10) gebremst werden, die von dem Defekt der Betriebsbremse (20) betroffen sind.

2. Verfahren nach Anspruch 1, **dadurch gekennzeichnet,**
- **dass** die Feststellbremsaktuatoren (24, 24', 24", 24"', 25, 25') Federspeicherbremszylinder umfassen, wobei die aufzubringenden Bremskräfte als Entlüftungsraten für die Federspeicherbremszylinder bestimmt werden und
- **dass** die Feststellbremsaktuatoren (24, 24', 24", 24"', 25, 25') gemäß den bestimmten Entlüftungsraten entlüftet werden.

3. Verfahren nach Anspruch 1, **dadurch gekennzeichnet,**
- **dass** die Feststellbremsaktuatoren (24, 24', 24", 24"', 25, 25') elektromotorisch zuspannbare Feststellbremsaktuatoren (24, 24', 24", 24"', 25, 25') umfassen, wobei die aufzubringenden Bremskräfte als Steuerimpulse für die elektromotorisch zuspannbaren Feststellbremsaktuatoren (24, 24', 24", 24"', 25, 25') bestimmt werden und
- **dass** die elektromotorisch zuspannbaren Feststellbremsaktuatoren (24, 24', 24", 24"', 25, 25') gemäß den bestimmten Steuerimpulsen betätigt werden.

4. Verfahren nach einem der vorhergehenden Ansprüche, **dadurch gekennzeichnet, dass** die ABS-Regelschleife eine Individualregelung für ein von der Feststellbremse (10) gebremstes Fahrzeugrad (28, 28', 28", 28"') umfasst, wobei die aufzubringende Bremskraft für das gebremste Fahrzeugrad (28, 28', 28", 28"') separat bestimmt wird.

5. Verfahren nach einem der vorhergehenden Ansprüche, **dadurch gekennzeichnet, dass** die ABS-Regelschleife eine "Select Low" Regelung für eine von der Feststellbremse (10) gebremste Fahrzeugachse (32, 32') umfasst, wobei die aufzubringende Bremskraft der Feststellbremsaktuatoren (24, 24', 24", 24"', 25, 25') der gebremsten Fahrzeugachse (32, 32', 32") durch die höchste aufzubringende Bremskraft bestimmt wird, bei der noch kein Fahrzeugrad (28, 28', 28", 28"') an der gebremsten Fahrzeugachse (32, 32', 32") blockiert.

6. Verfahren nach einem der vorhergehenden Ansprüche, **dadurch gekennzeichnet, dass** die ABS-Regelschleife eine modifizierte Individualregelung für eine von der Feststellbremse (10) gebremste Fahrzeugachse (32, 32', 32") umfasst, wobei die aufzubringende Bremskraft der Feststellbremsaktuatoren (24, 24', 24", 24"', 25, 25') der gebremsten Fahrzeugachse (32, 32', 32") durch die höchste aufzubringende Bremskraft bestimmt wird, bei der noch kein Fahrzeugrad (28, 28', 28", 28"') an der gebremsten Fahrzeugachse (32, 32', 32") blockiert, und diese aufzubringende Bremskraft durch die übrigen Feststellbremsaktuatoren (24, 24', 24", 24"', 25, 25') an derselben gebremsten Fahrzeugachse (32, 32', 32") um eine vorgegebene Toleranz überschritten werden darf.

7. Verfahren nach einem der vorhergehenden Ansprüche, **dadurch gekennzeichnet, dass** die ABS-Regelschleife Drehzahl- beziehungsweise Drehfrequenzverläufe der abzubremsenden Fahrzeugräder (28, 28', 28", 28"') berücksichtigt.

8. Bremsanlage (34) eines Nutzfahrzeugs (12) mit einer Feststellbremsaktuatoren (24, 24', 24", 24"', 25, 25') umfassenden Feststellbremse (10) und einer Betriebsbremse (20), wobei im Falle eines Defektes der Betriebsbremse (20) die Feststellbremse (10) eine Bremsung des Nutzfahrzeugs (12) unterstützt, wobei die Feststellbremse (10) ein elektronisches Steuergerät (14) umfasst, welches dazu ausgelegt ist, eine ABS-Regelschleife zum Betätigen der Feststellbremsaktuatoren (24, 24', 24", 24"', 25, 25') durchzuführen, **dadurch gekennzeichnet, dass** die Feststellbremse (12) dazu ausgelegt ist, mehrere Fahrzeugachsen (32, 32', 32") in beliebigen Kombinationen zu bremsen wobei nur die Fahrzeugachsen (32, 32', 32") gebremst werden, die von dem Defekt der Betriebsbremse (20) betroffen sind.

9. Bremsanlage nach Anspruch 8 **dadurch gekennzeichnet, dass** die Feststellbremse (10) dazu ausgelegt ist, über die Feststellbremszylinder (24, 24', 24", 24"', 25, 25') gleichzeitig unterschiedliche Bremskräfte auszuüben.

## Claims

1. Method for operating a braking assembly (34) of a utility vehicle (12), said braking assembly (34) comprising a parking brake (10) with parking brake actuators (24, 24', 24", 24"', 25, 25') and a service brake (20), wherein in case of a defect in the service brake (20) the parking brake (10) supports braking of the utility vehicle (12), wherein the braking forces to be applied by the parking brake actuators (24, 24', 24", 24"', 25, 25') of the parking brake (10) are determined via an ABS control loop and the parking brake actuators (24, 24', 24", 24"', 25, 25') are actuated according to the determined braking forces to be applied, **characterised in that**
- a plurality of vehicle axles (32, 32', 32") can be braked in any given combinations by the parking brake (10) and
- only the vehicle axles (32, 32', 32") affected by the defect in the service brake (20) are braked by the parking brake (10).

2. Method according to claim 1, **characterised in that**
- the parking brake actuators (24, 24', 24", 24"', 25, 25') comprise spring-loaded brake cylinders, wherein the braking forces to be applied are determined as venting rates for the spring-loaded brake cylinders and
- the parking brake actuators (24, 24', 24", 24"', 25, 25') are vented according to the determined venting rates.

3. Method according to claim 1, **characterised in that**
- the parking brake actuators (24, 24', 24", 25, 25') comprise parking brake actuators (24, 24', 24", 25, 25') which can be applied by an electric motor, wherein the braking forces to be applied are determined as control pulses for the parking brake actuators (24, 24', 24", 24"', 25, 25') which can be applied by an electric motor and
- the parking brake actuators (24, 24', 24", 24"', 25, 25') which can be applied by an electric motor are actuated according to the determined control pulses.

4. Method according to one of the preceding claims, **characterised in that** the ABS control loop comprises individual control for a vehicle wheel (28, 28', 28", 28"') braked by the parking brake (10), wherein the braking force to be applied is determined separately for the vehicle wheel (28, 28', 28", 28"') braked.

5. Method according to one of the preceding claims, **characterised in that** the ABS control loop comprises a "select low" control for a vehicle axle (32, 32') braked by the parking brake (10), wherein the braking force, to be applied, of the parking brake actuators (24, 24', 24", 24"', 25, 25') of the braked vehicle axle (32, 32', 32") is determined by the highest braking force to be applied, at which no vehicle wheel (28, 28', 28", 28"') locks on the braked vehicle axle (32, 32', 32").

6. Method according to one of the preceding claims, **characterised in that** the ABS control loop comprises a modified individual control for a vehicle axle (32, 32', 32") braked by the parking brake (10), wherein the braking force, to be applied, of the parking brake actuators (24, 24', 24", 24"', 25, 25') of the braked vehicle axle (32, 32', 32") is determined by the highest braking force to be applied, at which no vehicle wheel (28, 28', 28", 28"') locks on the braked vehicle axle (32, 32', 32"), and this braking force to be applied may be exceeded by the remaining parking brake actuators (24, 24', 24", 24"', 25, 25') on the same braked vehicle axle (32, 32', 32") by a predefined tolerance.

7. Method according to one of the preceding claims, **characterised in that** the ABS control loop considers rotational speed or rotational frequency patterns of the vehicle wheels (28, 28', 28", 28"') to be braked.

8. Braking assembly (34) of a utility vehicle (12) with a parking brake (10) comprising parking brake actuators (24, 24', 24", 24"', 25, 25') and a service brake (20), wherein in case of a defect in the service brake (20) the parking brake (10) supports braking of the utility vehicle (12), wherein the parking brake (10) comprises an electronic control unit (14) which is designed to carry out an ABS control loop to actuate the parking brake actuators (24, 24', 24", 25, 25'), **characterised in that** the parking brake (12) is designed to brake a plurality of vehicle axles (32, 32', 32") in any combinations, wherein only the vehicle axles (32, 32', 32") affected by the defect in the service brake (20) are braked.

9. Braking assembly according to claim 8, **characterised in that** the parking brake (10) is designed to simultaneously exert different braking forces via the parking brake cylinders (24, 24', 24", 24"', 25, 25').

## Revendications

1. Procédé pour faire fonctionner un système (34) de frein d'un véhicule (12) utilitaire comprenant des actionneurs (24, 24', 24", 24"', 25, 25') de frein de stationnement et un frein (20) de service dans lequel, dans le cas d'un défaut du frein (20) de service, le frein (10) de stationnement facilite un freinage du véhicule (12) utilitaire, les forces de freinage s'appliquant par les actionneurs (24, 24', 24', 24", 25, 25') du frein (10) de stationnement étant déterminées par une boucle de régulation ABS et les actionneurs (24, 24', 24", 24'", 25, 25') de frein de stationnement étant actionnés suivant les forces de freinage déterminées qui s'appliquent,**caractérisé**
- **en ce que** plusieurs essieux (32, 32', 32") du véhicule peuvent être freinés en une combinaison quelconque par le frein (10) de stationnement et
- **en ce que** seuls les essieux (32, 32', 32") du véhicule, qui sont concernés par le défaut du frein (20) de service, sont freinés par le frein (10) de stationnement.

2. Procédé suivant la revendication 1 **caractérisé,**
- **en ce que** les actionneurs (24, 24', 24", 24'", 25, 25') de frein de stationnement comprennent des cylindres de frein à ressort accumulateur, les forces de freinage qui s'appliquent étant définies comme des taux de mise à l'atmosphère des cylindres de frein à ressort accumulateur et
- **en ce que** les actionneurs (24, 24', 24", 24'", 25, 25') de frein de stationnement sont mis à l'atmosphère suivant les taux de mise à l'atmosphère définis.

3. Procédé suivant la revendication 1, **caractérisé**
- **en ce que** les actionneurs (24, 24', 24", 24'", 25, 25') de frein de stationnement comprennent des actionneurs (24, 24', 24", 24'", 25, 25') de frein de stationnement pouvant être serrés par moteur électrique, les forces de freinage à appliquer étant déterminées comme des impulsions de commande des actionneurs (24, 24', 24", 24'", 25, 25') de frein de stationnement pouvant être serrés par moteur électrique et
- les actionneurs (24, 24', 24", 24'", 25, 25') de frein de stationnement pouvant être serrés par moteur électrique sont actionnées suivant des impulsions de commande déterminées.

4. Procédé suivant l'une des revendications précédentes, **caractérisé en ce que** la boucle de régulation ABS comprend une régulation individuelle pour la roue (28, 28', 28", 28'") du véhicule freinée par le frein (10) de stationnement, la force de freinage qui s'applique à la roue (28, 28', 28", 28'") du véhicule freinée étant déterminée séparément.

5. Procédé suivant l'une des revendications précédentes, **caractérisé en ce que** la boucle de régulation ABS comprend une régulation «select low» pour un essieu (32,32') de véhicule freiné par le frein (10) de stationnement la force de freinage qui s'applique des actionneurs (24, 24', 24", 24'", 25, 25') de frein de stationnement de l'essieu (32,32',32") de véhicule freiné étant déterminée par la force de freinage la plus grande qui s'applique, pour laquelle une roue (28, 28', 28", 28'") du véhicule sur l'essieu (32, 32', 32") du véhicule freiné n'est pas encore bloquée.

6. Procédé suivant l'une des revendications précédentes, **caractérisé en ce que** la boucle de régulation ABS comprend une régulation individuelle modifiée pour un essieu (32, 32', 32 ") de véhicule freiné par le frein (10) de stationnement, la force de freinage qui s'applique des actionneurs (24, 24', 24", 24'", 25, 25') de frein de stationnement de l'essieu (32, 32', 32") de véhicule freiné étant déterminée par la force de freinage la plus grande qui s'applique, pour laquelle une roue (28, 28', 28", 28"') de véhicule sur l'essieu (32, 32', 32") de véhicule freiné n'est pas encore bloquée, et cette force de freinage qui s'applique peut être dépassée d'une tolérance prescrite par les autres actionneurs (24, 24', 24", 24'", 25, 25') de frein de stationnement sur le même essieu (32, 32', 32") de véhicule freiné.

7. Procédé suivant l'une des revendications précédentes, **caractérisé en ce que** la boucle de régulation ABS tient compte des variations de vitesse de rotation ou de fréquence de rotation des roues (28, 28', 28", 28'") du véhicule à freiner.

8. Système (34) de freinage d'un véhicule (12 utilitaire comprenant un frein (10) de stationnement ayant des actionneurs (24, 24', 24", 24'", 25, 25') de frein de stationnement et un frein (20) de service dans lequel, dans le cas d'un défaut du frein (20) de service, le frein(10) de stationnement facilite un freinage du véhicule (12) utilitaire, dans lequel le frein (10) de stationnement comprend un appareil (14) électronique de commande, qui est conçu pour effectuer une boucle de régulation pour l'actionnement des actionneurs (24, 24', 24", 24'", 25, 25') de frein de stationnement **caractérisé en ce que** le frein (12) de stationnement est conçu pour freiner en n'importe quelle combinaison plusieurs essieux (32, 32', 32") de véhicule, dans lequel seuls sont freinés les essieux (32, 32', 32") du véhicule qui sont concernés par le défaut du frein (20) de service.

9. Système de freinage suivant la revendication 8, **caractérisé en ce que** le frein (10) de service est conçu pour appliquer en même temps des forces de freinage différentes par les cylindres (24, 24', 24", 24'", 25, 25') de frein de stationnement.
